# EUROPÄISCHE PATENTSCHRIFT

(11) **EP 3 810 959 B1**
(45) Veröffentlichungstag und Bekanntmachung des Hinweises auf die Patenterteilung: **05.11.2025**
(21) Anmeldenummer: 19726648.9
(22) Anmeldetag: 23.05.2019
(51) Int. Cl.: F16H 1/46, F16H 57/033

(54) **GETRIEBEBAUREIHE**
TRANSMISSION SERIES
SÉRIE DE BOÎTES DE VITESSES

(30) Priorität: 21.06.2018 DE 102018210131
(43) Veröffentlichungstag der Anmeldung: 28.04.2021
(73) Patentinhaber: ZF Friedrichshafen AG, 88046 Friedrichshafen (DE); ZF Wind Power Antwerpen NV, 3920 Lommel (BE)
(72) Erfinder: SMOOK, Warren, 3040 Huldenberg (BE)
(74) Vertreter: ZF Friedrichshafen AG
(86) Internationale Anmeldenummer: PCT/EP2019/063273
(87) Internationale Veröffentlichungsnummer: WO 2019/242976

(56) Entgegenhaltungen:
- EP-A1- 3 021 003
- WO-A1-2018/141715
- DE-A1- 102015 222 948
- DE-A1- 2 649 949
- DE-U1- 202006 006 116

## Beschreibung

Die Erfindung betrifft eine Baureihe bestehend aus Getrieben nach dem Oberbegriff von Anspruch 1.

Die Konstruktion und Fertigung von Getrieben erfordert einen erheblichen - Investitions- und Ressourcenaufwand. Viele Anbieter sind daher bestrebt, mit einem einzigen Getriebetyp möglichst viele Anwendungsfälle abzudecken. Dies aber führt dazu, dass das Getriebe bei Anwendungsfällen mit geringen Belastungen überdimensioniert ist. Ein überdimensioniertes Getriebe wiederum bietet Potenzial für Kosteneinsparungen.

Vor diesem Hintergrund bietet sich die Entwicklung einer Getriebebaureihe an. Eine Baureihe ermöglicht es, einerseits Komponenten in verschiedenen Getrieben der Baureihe zu verwenden. Andererseits lassen sich die Getriebe der Baureihe an spezifische Anwendungsfälle anpassen. Beides wirkt sich kostensparend aus.

Im Bereich der Windkraftanlagen allerdings konnten sich herkömmliche Arten von Getriebebaureihen bisher nicht durchsetzen. Der Einsatz von Baureihen ist hier schwierig, da die Anlagenhersteller stark voneinander abweichende Schnittstellen zwischen der Anlage und dem Getriebe vorgeben. Weiterhin muss eine stark variierende Bandbreite von Lastfällen abgedeckt werden.

Aus der Druckschrift DE 100 28 046 A1 ist eine Baureihe von Umlaufgetrieben bekannt, deren Getriebe sich durch variierende Zahnbreiten unterscheiden. Die Getriebe können mehrstufig ausgeführt sein. Allerdings betrifft die Variation der Zahnbreiten nur eine einzige Getriebestufe.

Aus der Druckschrift DE 26 49 949 A1 ist eine Baureihe von Umlaufgetrieben bekannt.

Der vorliegenden Erfindung liegt die Aufgabe zugrunde, Getriebe für Windkraftanlagen unter Umgehung der den aus dem Stand der Technik bekannten Lösungen innewohnenden Nachteile verfügbar zu machen. Insbesondere sollen ohne Beeinträchtigung technischer Eigenschaften Kosten reduziert werden.

Diese Aufgabe wird gelöst durch eine Baureihe nach Anspruch 1. Bevorzugte Weiterbildungen sind in den Unteransprüchen enthalten.

Eine Baureihe ist definiert als eine Mehrzahl einzelner Vorrichtungen. Die erfindungsgemäße Baureihe besteht aus Getrieben, vorzugsweise Getriebe für Windkraftanlagen, und umfasst mindestens ein erstes Getriebe und ein zweites Getriebe.

Jedes Getriebe der Baureihe weist eine erste Planetenstufe, eine zweite Planetenstufe und eine dritte Getriebestufe auf. Die zweite Planetenstufe ist der ersten Planetenstufe nachgeschaltet.

Dies bedeutet, dass die erste Planetenstufe in einem Drehmomentfluss von einem Eingang zu einem Ausgang des Getriebes vor der zweiten Planetenstufe angeordnet ist. Dabei wird ein Drehmoment von der ersten Planetenstufe zu der zweiten Planetenstufe übertragen.

Bei einer Planetenstufe handelt es sich um eine Getriebestufe mit einem Hohlrad, einem Sonnenrad, einem Planetenträger und einem oder mehreren, vorzugsweise baugleichen, Planetenrädern. Die Planetenräder sind drehbar in dem Planetenträger gelagert und kämmen jeweils mit dem Hohlrad und/oder dem Sonnenrad. Zwei beliebige der drei Komponenten Sonnenrad, Planetenträger und Hohlrad sind drehbar gelagert. Die dritte Komponente ist drehfest angeordnet.

Die Breite der Planetenräder der ersten Planetenstufe des ersten Getriebes ist geringer als die Breite der Planetenräder der ersten Planetenstufe des zweiten Getriebes.

Die Breite eines Zahnrads ist eine Bezeichnung für die Breite seiner Zähne. Hiermit wiederum wird die räumliche Ausdehnung der Zähne in axialer Richtung, das heißt entlang einer Drehachse des Zahnrads, verstanden. Dabei liegt die Annahme zugrunde, dass sämtliche Zähne des Zahnrads gleich breit sind.

Erfindungsgemäß ist auch die Breite der Planetenräder der zweiten Planetenstufe des ersten Getriebes geringer als die Breite der Planetenräder der zweiten Planetenstufe des zweiten Getriebes. Hierdurch lassen sich die Getriebe der Baureihe besonders gut an die auftretenden Lastfälle anpassen. Insbesondere lässt sich eine zu leistungsfähige Auslegung einzelner Planetenstufen, die mit unnötig hohen Kosten einhergeht, vermeiden.

Erfindungsgemäß stimmen die Anzahl der Planetenräder der ersten Planetenstufe des ersten Getriebes und die Anzahl der Planetenräder der ersten Planetenstufe des zweiten Getriebes bei baugleichen Planetenträgern in der ersten Planetenstufe des ersten Getriebes und der ersten Planetenstufe des zweiten Getriebes und/oder die Anzahl der Planetenräder der zweiten Planetenstufe des ersten Getriebes und die Anzahl der Planetenräder der zweiten Planetenstufe des zweiten Getriebes bei baugleichen Planetenträgern in der zweiten Planetenstufe des ersten Getriebes und der zweiten Planetenstufe des zweiten Getriebes überein.

Allgemein sind zwei Komponenten dann baugleich, wenn sie sich abgesehen von Fertigungstoleranzen gleichen. Insbesondere stimmen sämtliche physikalischen Parameter, wie etwa die Abmessungen oder die Materialeigenschaften, der Bauteile im Rahmen der Fertigungstoleranzen überein. Baugleiche Komponenten zeichnen sich dadurch aus, dass sie gegeneinander austauschbar sind.

In einer darüber hinaus bevorzugten Weiterbildung stimmen die Anzahl der Planetenräder der ersten Planetenstufe des ersten Getriebes und die Anzahl der Planetenräder der zweiten Planetenstufe des ersten Getriebes überein. Gleiches gilt bevorzugt für die Anzahl der Planetenräder der ersten Planetenstufe des zweiten Getriebes und die Anzahl der Planetenräder der zweiten Planetenstufe des zweiten Getriebes.

Neben dem ersten Getriebe und dem zweiten Getriebe ist die Baureihe bevorzugt mit einem dritten Getriebe und einem vierten Getriebe weitergebildet. Auch das dritte Getriebe und das vierte Getriebe weisen jeweils eine erste Planetenstufe und eine zweite Planetenstufe auf. Die Breite der Planetenräder der ersten Planetenstufe des dritten Getriebes ist geringer als die Breite der Planetenräder der ersten Planetenstufe des vierten Getriebes. Ebenso ist die Breite der Planetenräder der zweiten Planetenstufe des dritten Getriebes geringer als die Breite der Planetenräder der zweiten Planetenstufe des vierten Getriebes.

Die Breite der Planetenräder der ersten Planetenstufe des dritten Getriebes entspricht in einer bevorzugten Weiterbildung der Breite der Planetenräder der ersten Planetenstufe des ersten Getriebes. Dadurch lassen sich etwa die Sonnenräder und die Hohlräder der ersten Planetenstufen des ersten Getriebes und des dritten Getriebes baugleich ausgestalten. Insbesondere ist es möglich, in den ersten Planetenstufen des ersten Getriebes und des dritten Getriebes baugleiche Planetenräder zu verwenden.

Die Breite der Planetenräder der zweiten Planetenstufe des dritten Getriebes entspricht in einer bevorzugten Weiterbildung der Breite der Planetenräder der zweiten Planetenstufe des ersten Getriebes. Dies ermöglicht die Verwendung baugleicher Hohlräder, Sonnenräder und insbesondere Planetenräder in den zweiten Planetenstufen des ersten Getriebes und des dritten Getriebes.

Die Breite der Planetenräder der ersten Planetenstufe des vierten Getriebes entspricht in einer bevorzugten Weiterbildung der Breite der Planetenräder der ersten Planetenstufe des zweiten Getriebes. Dadurch lassen sich in den ersten Planetenstufen des zweiten Getriebes und des vierten Getriebes baugleiche Hohlräder, Sonnenräder und insbesondere Planetenräder verwenden.

Schließlich entspricht in einer bevorzugten Weiterbildung die Breite der Planetenräder der zweiten Planetenstufe des vierten Getriebes der Breite der Planetenräder der zweiten Planetenstufe des zweiten Getriebes, sodass sich auch hier baugleiche Hohlräder, Sonnenräder und insbesondere Planetenräder verwenden lassen.

In einer darüber hinaus bevorzugten Weiterbildung stimmen die Anzahl der Planetenräder der ersten Planetenstufe des dritten Getriebes und die Anzahl der Planetenräder der ersten Planetenstufe des vierten Getriebes überein. Infolgedessen können für die ersten Planetenstufen des dritten Getriebes und des vierten Getriebes baugleiche Planetenträger verwendet werden.

Ebenso stimmen in einer bevorzugten Weiterbildung die Anzahl der Planetenräder der zweiten Planetenstufe des dritten Getriebes und die Anzahl der Planetenräder der zweiten Planetenstufe des vierten Getriebes überein, sodass sich baugleiche Planetenräder in den zweiten Planetenstufen des dritten Getriebes und des vierten Getriebes verwenden lassen.

In einer bevorzugten Weiterbildung stimmt die Anzahl der Planetenräder der ersten Planetenstufe des dritten Getriebes mit der Anzahl der Planetenräder der zweiten Planetenstufe des dritten Getriebes überein. Gleiches gilt bevorzugt für die Anzahl der Planetenräder der ersten Stufe des vierten Getriebes und die Anzahl der Planetenräder der zweiten Planetenstufe des vierten Getriebes.

Die Anzahl der Planetenräder der ersten Planetenstufe des dritten Getriebes ist hingegen in einer bevorzugten Weiterbildung größer als die Anzahl der Planetenräder der ersten Planetenstufe des ersten Getriebes. Analog sind in bevorzugten Weiterbildungen die Anzahl der Planetenträger der zweiten Planetenstufe des dritten Getriebes größer als die Anzahl der Planetenräder der zweiten Planetenstufe des ersten Getriebes, die Anzahl der Planetenräder der ersten Planetenstufe des vierten Getriebes größer als die Anzahl der Planetenräder der ersten Planetenstufe des dritten Getriebes bzw. die Anzahl der Planetenräder der zweiten Planetenstufe des vierten Getriebes größer als die Anzahl der Planetenräder der zweiten Planetenstufe des zweiten Getriebes.

Bevorzugte Ausführungsbeispiele der Erfindung sind in den Figuren dargestellt.

Übereinstimmende Bezugsziffern kennzeichnen dabei gleiche oder funktionsgleiche Merkmale. Im Einzelnen zeigt:
Fig. 1 ein erstes Getriebeschema;
Fig. 2 ein zweites Getriebeschema; und
Fig. 3 eine Getriebebaureihe.

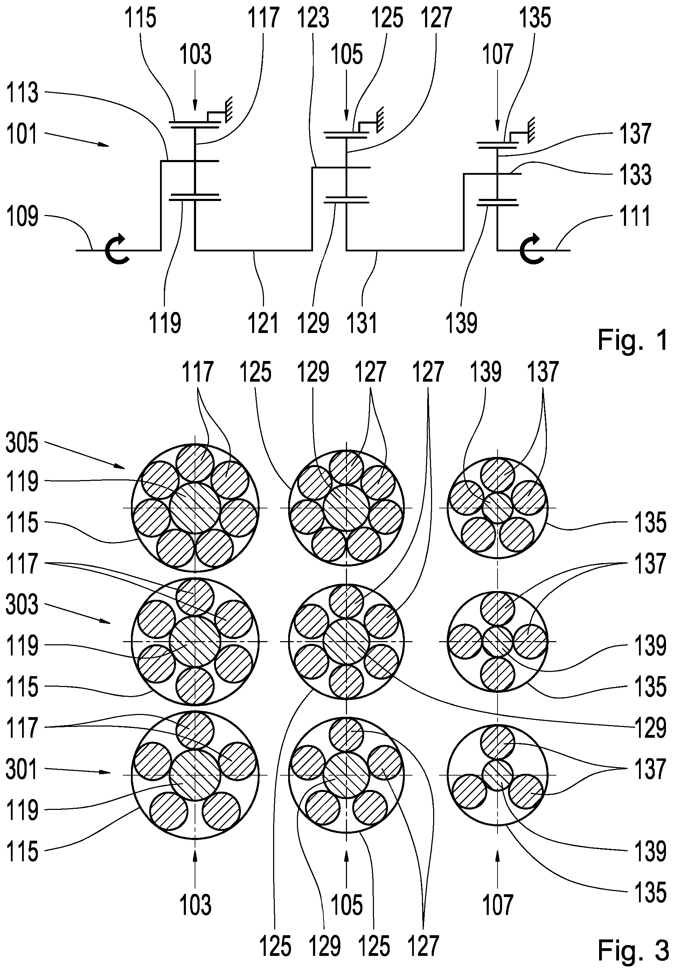

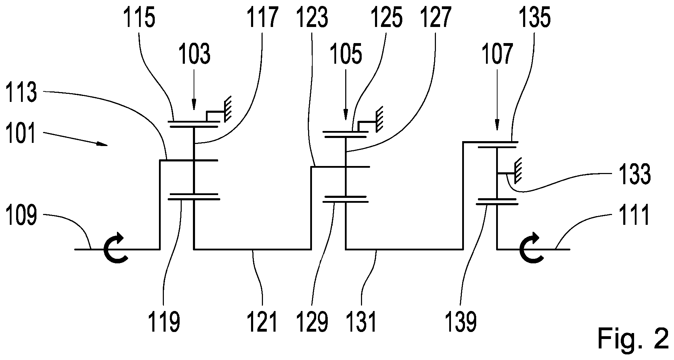

Die Schemata in den Figuren 1 und 2 stellen Getriebe 101 mit einer ersten Planetenstufe 103, einer zweiten Planetenstufe 105 und einer dritten Planetenstufe 107 dar. Das Getriebe 101 weist ferner eine Eingangswelle 109 und eine Ausgangswelle 111 auf.

Die Eingangswelle 109 ist drehfest mit einem drehbaren Planetenträger 113 der ersten Planetenstufe 103 verbunden. Die erste Planetenstufe 103 weist darüber hinaus ein Hohlrad 115, Planetenräder 117 und ein Sonnenrad 119 auf. Die Planetenräder 117 sind drehbar in den Planetenträger 113 gelagert und kämmen mit dem Hohlrad 115 und dem Sonnenrad 119. Das Hohlrad 115 ist drehfest angeordnet, das Sonnenrad 119 drehbar.

Über eine erste Zwischenwelle 121 ist das Sonnenrad 119 der ersten Planetenstufe 103 drehfest mit einem drehbaren Planetenträger 123 der zweiten Planetenstufe 105 verbunden. Der Aufbau der zweiten Planetenstufe 105 entspricht dem Aufbau der ersten Planetenstufe 103. Entsprechend weist die zweite Planetenstufe 105 ein drehfest angeordnetes Hohlrad 125, drehbar in dem Planetenträger 123 gelagerte Planetenräder 127 und ein drehbares Sonnenrad 129 auf. Die Planetenräder 127 sind drehbar in dem Planetenträger 123 gelagert und kämmen mit dem Hohlrad 125 und dem Sonnenrad 129.

Gemäß Fig. 1 ist das Sonnenrad 129 der zweiten Planetenstufe 105 über eine Zwischenwelle 131 drehfest mit einem Planetenträger 133 der dritten Planetenstufe 107 verbunden. Der Aufbau der dritten Planetenstufe 107 entspricht gemäß Fig. 1 dem Aufbau der ersten Planetenstufe 103 und der zweiten Planetenstufe 105. Demgemäß weist die dritte Planetenstufe 107 ein drehfest angeordnetes Hohlrad 135, Planetenräder 137 und ein drehbares Sonnenrad 139 auf. Die Planetenräder 137 sind drehbar in dem Planetenträger 133 gelagert und kämmen mit dem Hohlrad 135 und dem Sonnenrad 139. Das Sonnenrad 139 ist drehfest mit der Ausgangswelle 111 verbunden.

Das in Fig. 2 dargestellte Getriebe 101 unterscheidet sich von dem in Fig. 1 dargestellten Getriebe durch den Aufbau der dritten Planetenstufe 107. Das Hohlrad 135 ist hier drehbar gelagert und über die zweite Zwischenwelle 131 drehfest mit dem Sonnenrad 129 der zweiten Planetenstufe 105 verbunden. Der Planetenträger 133 ist drehfest angeordnet.

Fig. 3 skizziert eine Getriebebaureihe. Die in der Baureihe enthaltenen Getriebe können etwa aufgebaut sein wie in den Figuren 1 oder 2 dargestellt.

Die Baureihe umfasst sechs Getriebe mit drei verschiedenen Bestückungen 301, 303, 305 von Planetenrädern 117, 127, 137. Aus jeder Bestückung 301, 303, 305 ergeben sich durch Variation der Breite der Planetenräder 117, 127 der ersten Planetenstufe 103 und der zweiten Planetenstufe 105 zwei verschiedene Getriebe.

Die erste Bestückung 301 sieht ein Getriebe 101 mit fünf Planetenrädern 117 in der ersten Planetenstufe 103, fünf Planetenrädern 127 in der zweiten Planetenstufe 105 und drei Planetenrädern 137 in der dritten Planetenstufe 107 vor. Der Baukasten 301 enthält zwei Getriebe 101 mit der ersten Bestückung 301. Diese unterscheiden sich durch die Breite der Planetenräder 117 der ersten Planetenstufe 103 und der Planetenräder 127 der zweiten Planetenstufe 105 derart, dass sowohl die Planetenräder 117 der ersten Planetenstufe 103 als auch die Planetenräder 127 der zweiten Planetenstufe 105 bei einem der beiden Getriebe schmaler ausgeführt sind als bei dem anderen. Die dritten Planetenstufen 107 der beiden Getriebe sind baugleich.

Die zweite Bestückung 303 sieht ein Getriebe 101 mit sechs Planetenrädern 117 in der ersten Planetenstufe 103, sechs Planetenrädern 127 in der zweiten Planetenstufe 105 und vier Planetenrädern 137 in der dritten Planetenstufe 107 vor. Der Baukasten 301 enthält zwei Getriebe 101 mit der zweiten Bestückung 303. Diese unterscheiden sich durch die Breite der Planetenräder 117 der ersten Planetenstufe 103 und der Planetenräder 127 der zweiten Planetenstufe 105 derart, dass sowohl die Planetenräder 117 der ersten Planetenstufe 103 als auch die Planetenräder 127 der zweiten Planetenstufe 105 bei einem der beiden Getriebe schmaler ausgeführt sind als bei dem anderen. Die dritten Planetenstufen 107 der beiden Getriebe sind baugleich.

Die dritte Bestückung 305 sieht ein Getriebe 101 mit sieben Planetenrädern 117 in der ersten Planetenstufe 103, sieben Planetenrädern 127 in der zweiten Planetenstufe 105 und fünf Planetenrädern 137 in der dritten Planetenstufe 107 vor. Der Baukasten 301 enthält zwei Getriebe 101 mit der dritten Bestückung 305. Diese unterscheiden sich durch die Breite der Planetenräder 117 der ersten Planetenstufe 103 und der Planetenräder 127 der zweiten Planetenstufe 105 derart, dass sowohl die Planetenräder 117 der ersten Planetenstufe 103 als auch die Planetenräder 127 der zweiten Planetenstufe 105 bei einem der beiden Getriebe schmaler ausgeführt sind als bei dem anderen. Die dritten Planetenstufen 107 der beiden Getriebe sind baugleich.

### Bezugszeichen

- 101: Getriebe
- 103: erste Planetenstufe
- 105: zweite Planetenstufe
- 107: dritte Planetenstufe
- 109: Eingangswelle
- 111: Ausgangswelle
- 113: Planetenträger
- 115: Hohlrad
- 117: Planetenrad
- 119: Sonnenrad
- 121: Zwischenwelle
- 123: Planetenträger
- 125: Hohlrad
- 127: Planetenrad
- 129: Sonnenrad
- 131: Zwischenwelle
- 133: Planetenträger
- 135: Hohlrad
- 137: Planetenrad
- 139: Sonnenrad
- 301: erste Bestückung
- 303: zweite Bestückung
- 305: dritte Bestückung

## Patentansprüche

1. Baureihe bestehend aus Getrieben, umfassend ein erstes Getriebe (101) und ein zweites Getriebe (101); wobei
die Getriebe (101) jeweils eine erste Planetenstufe (103), eine zweite Planetenstufe (105) und eine dritte Getriebestufe (107) aufweisen; wobei
die zweite Planetenstufe (105) jeweils der ersten Planetenstufe (103) nachgeschaltet ist; wobei
die erste Planetenstufe (103) und die zweite Planetenstufe (105) jeweils ein Hohlrad (115, 125), einen Planetenträger (113, 123) mit einem oder mehreren Planetenrädern (117, 127) und ein Sonnenrad (119, 129) aufweisen; wobei
die Breite der Planetenräder (117) der ersten Planetenstufe (103) des ersten Getriebes (101) geringer ist als die Breite der Planetenräder (117) der ersten Planetenstufe (103) des zweiten Getriebes (101); und wobei
die Breite der Planetenräder (127) der zweiten Planetenstufe (105) des ersten Getriebes (101) geringer ist als die Breite der Planetenräder (127) der zweiten Planetenstufe (105) des zweiten Getriebes (101); **dadurch gekennzeichnet, dass**
die Anzahl der Planetenräder (117) der ersten Planetenstufe (103) des ersten Getriebes (101) und die Anzahl der Planetenräder (117) der ersten Planetenstufe (103) des zweiten Getriebes (101) bei baugleichen Planetenträgern (113) in der ersten Planetenstufe (103) des ersten Getriebes (101) und der ersten Planetenstufe (103) des zweiten Getriebes (101) übereinstimmen; und/oder
die Anzahl der Planetenräder (127) der zweiten Planetenstufe (105) des ersten Getriebes (101) und die Anzahl der Planetenräder (127) der zweiten Planetenstufe (105) des zweiten Getriebes (101) bei baugleichen Planetenträgern (123) in der zweiten Planetenstufe (105) des ersten Getriebes (101) und der zweiten Planetenstufe (105) des zweiten Getriebes (101) übereinstimmen.

2. Baureihe nach Anspruch 1; **dadurch gekennzeichnet, dass**
die Anzahl der Planetenräder (117) der ersten Planetenstufe (103) des ersten Getriebes (101) und die Anzahl der Planetenräder (127) der zweiten Planetenstufe (105) des ersten Getriebes (101) übereinstimmen.

3. Baureihe nach einem der vorhergehenden Ansprüche; **dadurch gekennzeichnet, dass**
die Anzahl der Planetenräder (117) der ersten Planetenstufe (103) des zweiten Getriebes (101) und die Anzahl der Planetenräder (127) der zweiten Planetenstufe (105) des zweiten Getriebes (101) übereinstimmen.

4. Baureihe nach einem der vorhergehenden Ansprüche **gekennzeichnet durch** ein drittes Getriebe (101) und ein viertes Getriebe (101); wobei
die Getriebe (101) jeweils eine erste Planetenstufe (103) und eine zweite Planetenstufe (105) aufweisen; wobei
die erste Planetenstufe (103) und die zweite Planetenstufe (105) jeweils ein Hohlrad (115, 125), einen Planetenträger (113, 123) mit einem oder mehreren Planetenrädern (117, 227) und ein Sonnenrad (119, 129) aufweisen; wobei
die Breite der Planetenräder (117) der ersten Planetenstufe (103) des dritten Getriebes (101) geringer ist als die Breite der Planetenräder (117) der ersten Planetenstufe (103) des vierten Getriebes (101); wobei
die Breite der Planetenräder (127) der zweiten Planetenstufe (105) des dritten Getriebes (101) geringer ist als die Breite der Planetenräder (127) der zweiten Planetenstufe (105) des vierten Getriebes (101).

5. Baureihe nach dem vorhergehenden Anspruch; **dadurch gekennzeichnet, dass**
die Breite der Planetenräder (117) der ersten Planetenstufe (103) des dritten Getriebes (101) der Breite der Planetenräder (117) der ersten Planetenstufe (103) des ersten Getriebes (101) entspricht.

6. Baureihe nach einem der vorhergehenden zwei Ansprüche; **dadurch gekennzeichnet, dass**
die Breite der Planetenräder (127) der zweiten Planetenstufe (105) des dritten Getriebes (101) der Breite der Planetenräder (127) der zweiten Planetenstufe (105) des ersten Getriebes (101) entspricht.

7. Baureihe nach einem der vorhergehenden drei Ansprüche; **dadurch gekennzeichnet, dass**
die Breite der Planetenräder (117) der ersten Planetenstufe (103) des vierten Getriebes (101) der Breite der Planetenräder (117) der ersten Planetenstufe (103) des zweiten Getriebes (101) entspricht.

8. Baureihe nach einem der vorhergehenden vier Ansprüche; **dadurch gekennzeichnet, dass**
die Breite der Planetenräder (127) der zweiten Planetenstufe (105) des vierten Getriebes (101) der Breite der Planetenräder (127) der zweiten Planetenstufe (105) des zweiten Getriebes (101) entspricht.

9. Baureihe nach einem der vorhergehenden fünf Ansprüche; **dadurch gekennzeichnet, dass**
die Anzahl der Planetenräder (117) der ersten Planetenstufe (103) des dritten Getriebes (101) und die Anzahl der Planetenräder (117) der ersten Planetenstufe (103) des vierten Getriebes (101) übereinstimmen.

10. Baureihe nach einem der vorhergehenden sechs Ansprüche; **dadurch gekennzeichnet, dass**
die Anzahl der Planetenräder (127) der zweiten Planetenstufe (105) des dritten Getriebes (101) und die Anzahl der Planetenräder (127) der zweiten Planetenstufe (105) des vierten Getriebes (101) übereinstimmen.

11. Baureihe nach einem der vorhergehenden sieben Ansprüche; **dadurch gekennzeichnet, dass**
die Anzahl der Planetenräder (117) der ersten Planetenstufe (103) des dritten Getriebes (101) und die Anzahl der Planetenräder (127) der zweiten Planetenstufe (105) des dritten Getriebes (101) übereinstimmen.

12. Baureihe nach einem der vorhergehenden acht Ansprüche; **dadurch gekennzeichnet, dass**
die Anzahl der Planetenräder (117) der ersten Planetenstufe (103) des vierten Getriebes (101) und die Anzahl der Planetenräder (127) der zweiten Planetenstufe (105) des vierten Getriebes (101) übereinstimmen.

13. Baureihe nach einem der vorhergehenden neun Ansprüche; **dadurch gekennzeichnet, dass**
die Anzahl der Planetenräder (117) der ersten Planetenstufe (103) des dritten Getriebes (101) größer als die Anzahl der Planetenräder (117) der ersten Planetenstufe (103) des ersten Getriebes (101).

14. Baureihe nach einem der vorhergehenden zehn Ansprüche; **dadurch gekennzeichnet, dass**
die Anzahl der Planetenräder (127) der zweiten Planetenstufe (105) des dritten Getriebes (101) größer als die Anzahl der Planetenräder (127) der zweiten Planetenstufe (105) des ersten Getriebes (101).

15. Baureihe nach einem der vorhergehenden elf Ansprüche; **dadurch gekennzeichnet, dass**
die Anzahl der Planetenräder (117) der ersten Planetenstufe (103) des vierten Getriebes (101) größer als die Anzahl der Planetenräder (117) der ersten Planetenstufe (103) des dritten Getriebes (101).

16. Baureihe nach einem der vorhergehenden zwölf Ansprüche; **dadurch gekennzeichnet, dass**
die Anzahl der Planetenräder (127) der zweiten Planetenstufe (105) des vierten Getriebes (101) größer als die Anzahl der Planetenräder (1227) der zweiten Planetenstufe (105) des zweiten Getriebes (101).

## Claims

1. A series consisting of transmissions, comprising a first transmission (101) and a second transmission (101); wherein
each of the transmissions (101) has a first planetary stage (103), a second planetary stage (105) and a third planetary stage (107); wherein
each second planetary stage (105) is downstream of the first planetary stage (103); wherein
each of the first planetary stage (103) and the second planetary stage (105) has a ring gear (115, 125), a planetary carrier (113, 123) with one or more planetary gears (117, 127) and a sun gear (119, 129); wherein
the width of the planetary gears (117) of the first planetary stage (103) of the first transmission (101) is less than the width of the planetary gears (117) of the first planetary stage (103) of the second transmission (101); and wherein
the width of the planetary gears (127) of the second planetary stage (105) of the first transmission (101) is less than the width of the planetary gears (127) of the second planetary stage (105) of the second transmission (101); **characterised in that**
the number of the planetary gears (117) of the first planetary stage (103) of the first transmission (101) and the number of the planetary gears (117) of the first planetary stage (103) of the second transmission (101) correspond to one another for identically constructed planetary carriers (113) in the first planetary stage (103) of the first transmission (101) and the first planetary stage (103) of the second transmission (101); and/or
the number of the planetary gears (127) of the second planetary stage (105) of the first transmission (101) and the number of the planetary gears (127) of the second planetary stage (105) of the second transmission (101) correspond to one another for identically constructed planetary carriers (123) in the second planetary stage (105) of the first transmission (101) and the second planetary stage (105) of the second transmission (101).

2. The series according to claim 1; **characterised in that**
the number of the planetary gears (117) of the first planetary stage (103) of the first transmission (101) and the number of the planetary gears (127) of the second planetary stage (105) of the first transmission (101) correspond to one another.

3. The series according to any one of the preceding claims;
**characterised in that**
the number of the planetary gears (117) of the first planetary stage (103) of the second transmission (101) and the number of the planetary gears (127) of the second planetary stage (105) of the second transmission (101) correspond to one another.

4. The series according to any one of the preceding claims, **characterised by** a third transmission (101) and a fourth transmission (101); wherein
each of the transmissions (101) has a first planetary stage (103) and a second planetary stage (105); wherein
each of the first planetary stage (103) and the second planetary stage (105) has a ring gear (115, 125), a planetary carrier (113, 123) with one or more planetary gears (117, 227) and a sun gear (119, 129); wherein
the width of the planetary gears (117) of the first planetary stage (103) of the third transmission (101) is less than the width of the planetary gears (117) of the first planetary stage (103) of the fourth transmission (101); wherein
the width of the planetary gears (127) of the second planetary stage (105) of the third transmission (101) is less than the width of the planetary gears (127) of the second planetary stage (105) of the fourth transmission (101).

5. The series according to the preceding claim; **characterised in that**
the width of the planetary gears (117) of the first planetary stage (103) of the third transmission (101) corresponds to the width of the planetary gears (117) of the first planetary stage (103) of the first transmission (101).

6. The series according to any one of the two preceding claims;
**characterised in that**
the width of the planetary gears (127) of the second planetary stage (105) of the third transmission (101) corresponds to the width of the planetary gears (127) of the second planetary stage (105) of the first transmission (101).

7. The series according to any one of the three preceding claims; **characterised in that**
the width of the planetary gears (117) of the first planetary stage (103) of the fourth transmission (101) corresponds to the width of the planetary gears (117) of the first planetary stage (103) of the second transmission (101).

8. The series according to any one of the four preceding claims; **characterised in that**
the width of the planetary gears (127) of the second planetary stage (105) of the fourth transmission (101) corresponds to the width of the planetary gears (127) of the second planetary stage (105) of the second transmission (101).

9. The series according to any one of the five preceding claims; **characterised in that**
the number of the planetary gears (117) of the first planetary stage (103) of the third transmission (101) and the number of the planetary gears (117) of the first planetary stage (103) of the fourth transmission (101) correspond to one another.

10. The series according to any one of the six preceding claims;
**characterised in that**
the number of the planetary gears (127) of the second planetary stage (105) of the third transmission (101) and the number of the planetary gears (127) of the second planetary stage (105) of the fourth transmission (101) correspond to one another.

11. The series according to any one of the seven preceding claims; **characterised in that**
the number of the planetary gears (117) of the first planetary stage (103) of the third transmission (101) and the number of the planetary gears (127) of the second planetary stage (105) of the third transmission (101) correspond to one another.

12. The series according to any one of the eight preceding claims; **characterised in that**
the number of the planetary gears (117) of the first planetary stage (103) of the fourth transmission (101) and the number of the planetary gears (127) of the second planetary stage (105) of the fourth transmission (101) correspond to one another.

13. The series according to any one of the nine preceding claims; **characterised in that**
the number of the planetary gears (117) of the first planetary stage (103) of the third transmission (101) is greater than the number of the planetary gears (117) of the first planetary stage (103) of the first transmission (101).

14. The series according to any one of the ten preceding claims;
**characterised in that**
the number of the planetary gears (127) of the second planetary stage (105) of the third transmission (101) is greater than the number of the planetary gears (127) of the second planetary stage (105) of the first transmission (101).

15. The series according to any one of the eleven preceding claims; **characterised in that**
the number of the planetary gears (117) of the first planetary stage (103) of the fourth transmission (101) is greater than the number of the planetary gears (117) of the first planetary stage (103) of the third transmission (101).

16. The series according to any one of the twelve preceding claims; **characterised in that**
the number of the planetary gears (127) of the second planetary stage (105) of the fourth transmission (101) is greater than the number of the planetary gears (1227) of the second planetary stage (105) of the second transmission (101).

## Revendications

1. Série constituée d'engrenages, comprenant un premier engrenage (101) et un deuxième engrenage (101) ; dans laquelle les engrenages (101) comportent chacun un premier étage planétaire (103), un deuxième étage planétaire (105) et un troisième étage d'engrenage (107) ; dans laquelle
le deuxième étage planétaire (105) est disposé en aval du premier étage planétaire (103) ; dans laquelle
le premier étage planétaire (103) et le deuxième étage planétaire (105) comportent chacun une couronne dentée (115, 125), un support planétaire (113, 123) avec un ou plusieurs engrenages planétaires (117, 127) et une roue solaire (119, 129) ; dans laquelle
la largeur des engrenages planétaires (117) du premier étage planétaire (103) du premier engrenage (101) est inférieure à la largeur des engrenages planétaires (117) du premier étage planétaire (103) du deuxième engrenage (101) ; et dans laquelle la largeur des engrenages planétaires (127) du deuxième étage planétaire (105) du premier engrenage (101) est inférieure à la largeur des engrenages planétaires (127) du deuxième étage planétaire (105) du deuxième engrenage (101) ; **caractérisé en ce que**
le nombre d'engrenages planétaires (117) du premier étage planétaire (103) du premier engrenage (101) et le nombre d'engrenages planétaires (117) du premier étage planétaire (103) du deuxième engrenage (101) sont les mêmes pour des support planétaire (113) de construction identique dans le premier étage planétaire (103) du premier engrenage (101) et le premier étage planétaire (103) du deuxième engrenage (101) ; et/ou
le nombre d'engrenages planétaires (127) du deuxième étage planétaire (105) du premier engrenage (101) et le nombre d'engrenages planétaires (127) du deuxième étage planétaire (105) du deuxième engrenage (101) correspondent à des support planétaire identiques (123) dans le deuxième étage planétaire (105) du premier engrenage (101) et le deuxième étage planétaire (105) du deuxième engrenage (101).

2. Série selon la revendication 1, **caractérisée en ce que**
le nombre d'engrenages planétaires (117) du premier étage planétaire (103) du premier engrenage (101) et le nombre d'engrenages planétaires (127) du deuxième étage planétaire (105) du premier engrenage (101) correspondent.

3. Série selon l'une quelconque des revendications précédentes, **caractérisée en ce que**
le nombre d'engrenages planétaires (117) du premier étage planétaire (103) du deuxième engrenage (101) et le nombre d'engrenages planétaires (127) du deuxième étage planétaire (105) du deuxième engrenage (101) correspondent.

4. Série selon l'une quelconque des revendications précédentes, **caractérisée par** un troisième engrenage (101) et un quatrième engrenage (101) ; dans laquelle
les engrenages (101) comportent chacun un premier étage planétaire (103) et un deuxième étage planétaire (105) ; dans laquelle
le premier étage planétaire (103) et le deuxième étage planétaire (105) comportent chacun une couronne dentée (115, 125), un support planétaire (113, 123) avec un ou plusieurs engrenages planétaires (117, 127) et une roue solaire (119, 129) ; dans laquelle
la largeur des engrenages planétaires (117) du premier étage planétaire (103) du troisième engrenage (101) est inférieure à la largeur des engrenages planétaires (117) du premier étage planétaire (103) du quatrième engrenage (101) ; dans laquelle
la largeur des engrenages planétaires (127) du deuxième étage planétaire (105) du troisième engrenage (101) est inférieure à la largeur des engrenages planétaires (127) du deuxième étage planétaire (105) du quatrième engrenage (101).

5. Série selon la revendication précédente, **caractérisée en ce que**
la largeur des engrenages planétaires (117) du premier étage planétaire (103) du troisième engrenage (101) correspond à la largeur des engrenages planétaires (117) du premier étage planétaire (103) du premier engrenage (101).

6. Série selon l'une quelconque des deux revendications précédentes, **caractérisée en ce que**
la largeur des engrenages planétaires (127) du deuxième étage planétaire (105) du troisième engrenage (101) correspond à la largeur des engrenages planétaires (127) du deuxième étage planétaire (105) du premier engrenage (101).

7. Série selon l'une quelconque des trois revendications précédentes, **caractérisée en ce que**
la largeur des engrenages planétaires (117) du premier étage planétaire (103) du quatrième engrenage (101) correspond à la largeur des engrenages planétaires (117) du premier étage planétaire (103) du deuxième engrenage (101).

8. Série selon l'une quelconque des quatre revendications précédentes, **caractérisée en ce que**
la largeur des engrenages planétaires (127) du deuxième étage planétaire (105) du quatrième engrenage (101) correspond à la largeur des engrenages planétaires (127) du deuxième étage planétaire (105) du deuxième engrenage (101).

9. Série selon l'une quelconque des cinq revendications précédentes, **caractérisée en ce que**
le nombre d'engrenages planétaires (117) du premier étage planétaire (103) du troisième engrenage (101) et le nombre d'engrenages planétaires (117) du premier étage planétaire (103) du quatrième engrenage (101) correspondent.

10. Série selon l'une quelconque des six revendications précédentes, **caractérisée en ce que**
le nombre d'engrenages planétaires (127) du deuxième étage planétaire (105) du troisième engrenage (101) et le nombre d'engrenages planétaires (127) du deuxième étage planétaire (105) du quatrième engrenage (101) correspondent.

11. Série selon l'une quelconque des sept revendications précédentes, **caractérisée en ce que**
le nombre d'engrenages planétaires (117) du premier étage planétaire (103) du troisième engrenage (101) et le nombre d'engrenages planétaires (127) du deuxième étage planétaire (105) du troisième engrenage (101) correspondent.

12. Série selon l'une quelconque des huit revendications précédentes, **caractérisée en ce que**
le nombre d'engrenages planétaires (117) du premier étage planétaire (103) du quatrième engrenage (101) et le nombre d'engrenages planétaires (127) du deuxième étage planétaire (105) du quatrième engrenage (101) correspondent.

13. Série selon l'une quelconque des neuf revendications précédentes, **caractérisée en ce que**
le nombre d'engrenages planétaires (117) du premier étage planétaire (103) du troisième engrenage (101) est supérieur au nombre d'engrenages planétaires (117) du premier étage planétaire (103) du premier engrenage (101).

14. Série selon l'une quelconque des dix revendications précédentes, **caractérisée en ce que**
le nombre d'engrenages planétaires (127) du deuxième étage planétaire (105) du troisième engrenage (101) est supérieur au nombre d'engrenages planétaires (127) du deuxième étage planétaire (105) du premier engrenage (101).

15. Série selon l'une quelconque des onze revendications précédentes, **caractérisée en ce que**
le nombre d'engrenages planétaires (117) du premier étage planétaire (103) du quatrième engrenage (101) est supérieur au nombre d'engrenages planétaires (117) du premier étage planétaire (103) du troisième engrenage (101).

16. Série selon l'une quelconque des douze revendications précédentes, **caractérisée en ce que**
le nombre d'engrenages planétaires (127) du deuxième étage planétaire (105) du quatrième engrenage (101) est supérieur au nombre d'engrenages planétaires (1227) du deuxième étage planétaire (105) du deuxième engrenage (101).
